# DEMANDE DE BREVET EUROPEEN

(11) **EP 2 002 768 A1**
(43) Date de publication de la demande: **17.12.2008**
(21) Numéro de dépôt: 08356080.5
(22) Date de dépôt: 11.06.2008
(51) Int. Cl.: A47J 36/08

(54) **Couvercle de casserole ou de faitout avec fonction égouttage et large vision**

(30) Priorité: 15.06.2007 FR 0704266
(71) Demandeur: SEB S.A., 69130 Ecully (FR)
(72) Inventeur: Coudurier, Olivier, 74370 Pringy (FR); Pasquini, Ludovic, 74000 Annecy (FR)
(74) Mandataire: Kiehl, Hubert

(57) **Abrégé**

- L'invention concerne un couvercle (1) de casserole ou de faitout comprenant un capot (3) adapté à recouvrir ladite casserole ou ledit faitout comportant un organe de recouvrement transparent (5), le couvercle (1) comprenant également un jonc en silicone ceinturant le capot (3).
- Conformément à l'invention le capot (3) comporte un organe de recouvrement métallique (6) muni d'ouvertures traversantes (10) prévues pour égoutter des aliments.

## Description

La présente invention concerne un couvercle d'article culinaire, par exemple un couvercle de casserole ou de faitout.

On connaît, d'après la demande de brevet français FR 0602537, un couvercle d'article culinaire du type comprenant un capot en verre adapté à couvrir l'article culinaire et un jonc en silicone ceinturant le capot et comportant une paroi tombante munie d'ouvertures qui coopère avec un bec verseur de la paroi latérale de l'article culinaire pour l'égouttage des aliments. Le jonc comporte également des extensions radiales faisant office d'organe de préhension.

Ce type de couvercle présente l'inconvénient de proposer une fonction égouttage peu performante. En effet, le nombre d'ouvertures dans la paroi tombante du couvercle, en regard du bec verseur est faible et limite le débit de l'eau qui s'évacue de l'article culinaire. De plus, ces ouvertures dans une paroi en silicone sont difficiles à nettoyer.

Le but de la présente invention est de remédier aux inconvénients précités et de proposer un couvercle d'article culinaire permettant une large vision de la cuisson dans l'article culinaire et comportant une fonction égouttage performante.

Un autre but de l'invention est de proposer un couvercle d'article culinaire qui soit de conception simple et économique à mettre en oeuvre.

Ces buts sont atteints avec un couvercle de casserole ou de faitout comprenant un capot adapté à recouvrir ladite casserole ou ledit faitout comportant un organe de recouvrement transparent, le couvercle comprenant également un jonc en silicone ceinturant le capot du fait que le capot comporte un organe de recouvrement métallique muni d'ouvertures traversantes prévues pour égoutter des aliments.

Selon l'invention, le couvercle comporte un capot en deux parties : une partie transparente pour permettre une bonne vision dans l'article culinaire et une partie métallique perforée pour permettre un égouttage facile des aliments cuits.

Avantageusement, l'organe de recouvrement transparent et l'organe de recouvrement métallique sont maintenus par un élément de liaison réalisé par surmoulage.

Cette disposition permet de réaliser un élément de liaison de façon simple et économique. De plus, la technique de surmoulage autorise des formes de l'élément de liaison qui permettent d'optimiser les surfaces des parties vision et égouttage.

De préférence, le jonc est réalisé par surmoulage.

Cette disposition permet d'obtenir un couvercle présentant une construction très économique en réalisant en une seule opération le jonc et l'élément de liaison.

Avantageusement, l'organe de recouvrement métallique comporte des extensions s'étendant radialement au-delà de la périphérie du jonc.

Cette disposition permet de façon simple et économique d'obtenir deux poignées latérales pour le couvercle.

De préférence, les extensions de l'organe de recouvrement métallique sont recouvertes de silicone lors de l'opération de surmoulage.

Cette disposition permet d'isoler thermiquement les poignées et d'améliorer le toucher de ces poignées.

Avantageusement, le jonc comporte une face inférieure comprenant des moyens de centrage du couvercle sur l'article culinaire.

Cette disposition permet d'obtenir de façon économique le positionnement du couvercle sur l'article culinaire, les moyens de centrage étant réalisés en même temps que le jonc, lors de l'opération de surmoulage.

De préférence, le rapport de la surface de l'organe de recouvrement transparent sur la surface totale du capot est compris entre 0,5 et 0,8, de préférence 0,6.

Cette disposition permet d'avoir un couvercle avec un capot essentiellement transparent permettant de favoriser la vision dans l'article culinaire.

L'invention sera mieux comprise à l'étude des modes de réalisation pris à titre nullement limitatif et illustrés dans les figures annexées dans lesquelles :
- La figure 1 est une vue en perspective du dessus d'un couvercle d'article culinaire selon un mode particulier de réalisation de l'invention.
- La figure 2 illustre une vue en perspective du dessous du couvercle d'article culinaire de la fig 1.
- La figure 3 illustre une vue en coupe partielle selon la ligne III-III du couvercle d'article culinaire de la fig 1.
- La figure 4 illustre une vue éclatée en perspective du couvercle d'article culinaire de la fig 1.

Comme on peut le voir aux figures de 1 à 4, un couvercle 1 pour article culinaire comprend un capot 3 adapté à recouvrir l'article culinaire comportant pour une première partie un organe de recouvrement transparent 5, par exemple une plaque de verre apte à permettre la vision dans l'article culinaire. Le couvercle 1 comprend également un jonc 8 en silicone ceinturant le capot 3 et s'étendant radialement au-delà de la périphérie du capot 3.

Dans la présente invention, le capot 3 comprend pour deuxième partie un organe de recouvrement métallique 6 muni d'ouvertures traversantes 10 apte à permettre l'échappement de la vapeur et l'égouttage des aliments cuits dans l'article culinaire. Cet organe de recouvrement métallique 6 est de préférence en acier inoxydable.

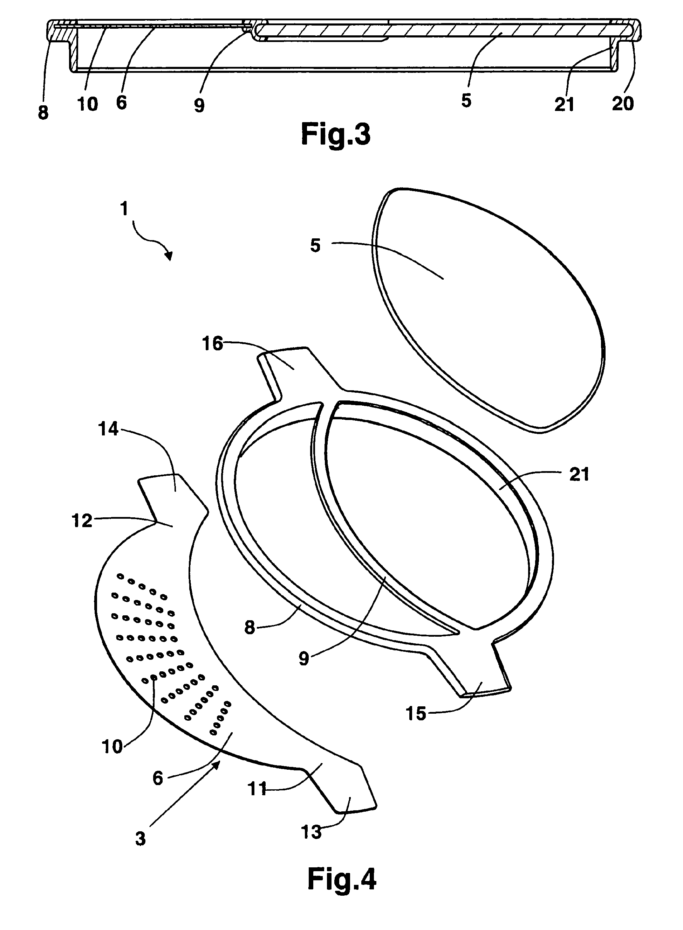

L'organe de recouvrement transparent 5 et l'organe de recouvrement métallique 6 sont maintenus l'un par rapport à l'autre par un élément de liaison 9 réalisé par surmoulage, cet élément de liaison ayant une section de forme générale en H (fig.3). De manière avantageuse, le jonc 8 est réalisé lors de la même opération de surmoulage

Le capot 3 a une forme circulaire et l'organe de recouvrement métallique 6 a une forme de croissant (fig.4) comportant deux extrémités 11,12. Ces deux extrémités 11,12 comprennent chacune une extension 13,14 s'étendant radialement au-delà de la périphérie du jonc 8. Les deux extensions 13,14 sont agencées pour être diamétralement opposées vers l'extérieur du capot 3.

Les deux extensions 13,14 sont destinées à être recouvertes de silicone lors de l'opération de surmoulage pour former deux poignées 15,16 pour le couvercle 1.

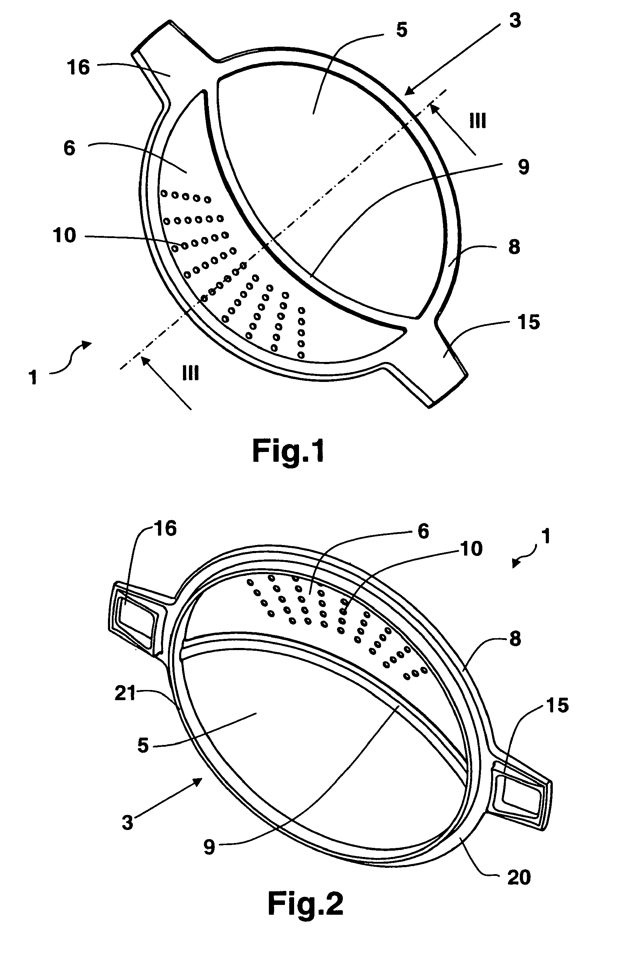

Le jonc 8 comporte une face inférieure 20 comprenant des moyens de centrage 21 du couvercle 1 sur l'article culinaire (Fig.2 et 3). Ces moyens de centrage 21 sont formés par une paroi tombante 21 réalisée en même temps que le jonc 8 et l'élément de liaison 9 lors de l'opération de surmoulage.

La majorité de la surface du capot 3 est occupée par l'organe de recouvrement transparent 5 pour obtenir une large vision dans l'article culinaire. Le rapport de la surface de l'organe de recouvrement transparent 5 sur la surface totale du capot 3 est compris entre 0,5 et 0,8, de préférence 0 ,6.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Couvercle (1) de casserole ou de faitout comprenant un capot (3) adapté à recouvrir ladite casserole ou ledit faitout comportant un organe de recouvrement transparent (5), le couvercle (1) comprenant également un jonc (8) en silicone ceinturant le capot (3), **caractérisé en ce que** le capot (3) comporte un organe de recouvrement métallique (6) muni d'ouvertures traversantes (10) prévues pour égoutter des aliments.

2. Couvercle (1) selon la revendication 1, **caractérisé en ce que** l'organe de recouvrement transparent (5) et l'organe de recouvrement métallique (6) sont maintenus par un élément de liaison (9) réalisé par surmoulage.

3. Couvercle (1) selon la revendication 2, **caractérisé en ce que** le jonc (8) est réalisé par surmoulage.

4. Couvercle (1) selon l'une des revendications 1 à 3, **caractérisé en ce que** l'organe de recouvrement métallique (6) comporte des extensions (13,14) s'étendant radialement au-delà de la périphérie du jonc (8).

5. Couvercle (1) selon la revendication 4, **caractérisé en ce que** les extensions (13,14) de l'organe de recouvrement métallique (6) sont recouvertes de silicone lors de l'opération de surmoulage.

6. Couvercle (1) selon l'une des revendications 1 à 5, **caractérisé en ce que** le jonc comporte une face inférieure (20) comprenant des moyens de centrage (21) du couvercle (1) sur l'article culinaire.

7. Couvercle (1) selon l'une des revendications 1 à 6, **caractérisé en ce que** le rapport de la surface de l'organe de recouvrement transparent (5) sur la surface totale du capot (3) est compris entre 0,5 et 0,8, de préférence 0 ,6.
